## Europäisches Patentamt
## European Patent Office
## Office européen des brevets

(19)

(11) Veröffentlichungsnummer : **0 068 247**
**B1**

(12) **EUROPÄISCHE PATENTSCHRIFT**

(45) Veröffentlichungstag der Patentschrift :
**21.01.87**

(21) Anmeldenummer : **82105147.1**

(22) Anmeldetag : **12.06.82**

(51) Int. Cl.⁴ : **F 04 F  5/10**, F 04 F  5/46,
**F 24 D  3/00**

(54) **Strahlpumpe, insbesondere für Warmwasserheizungs- oder -bereitungsanlagen mit Rücklaufbeimischung.**

(30) Priorität : **30.06.81 DE 3125583**

(43) Veröffentlichungstag der Anmeldung :
**05.01.83 Patentblatt 83/01**

(45) Bekanntmachung des Hinweises auf die Patenterteilung : **21.01.87 Patentblatt 87/04**

(84) Benannte Vertragsstaaten :
**AT BE CH FR GB IT LI NL SE**

(56) Entgegenhaltungen :
EP-A- 0 020 872
DE-A- 2 225 263
DE-C-    15 243
US-A-    333 086
US-A- 1 693 101
US-A- 2 909 127
US-A- 4 183 722

(73) Patentinhaber : **Bälz, Helmut**
**Koepffstrasse 5**
**D-7100 Heilbronn (DE)**

(72) Erfinder : **Ehrhardt, Gerd, Dr.-Ing.**
**Oberforstbacher Strasse 197**
**D-5100 Aachen (DE)**

(74) Vertreter : **Barthelt, Hans-Peter, Dipl.-Ing. et al**
**Patentanwälte Dr.-Ing. R. Rüger Dipl.-Ing. H.P. Bar-thelt Webergasse 3 Postfach 348**
**D-7300 Esslingen a.N. (DE)**

**Beschreibung**

Die Erfindung betrifft eine einstufige Strahlpumpe für Warmwasserheizungs- oder -bereitungsanlagen mit Rücklaufbeimischung gemäß dem Oberbegriff des Anspruchs 1.

Eine gattungsgemäße Strahlpumpe ist aus der Praxis bekannt und in der DE-A-2 920 923 (entsprechend EP-A-0 020 872) beschrieben. In der dort erläuterten Warmwasserheizungs- oder -bereitungsanlage ist der Einspeisekopf über den ersten Leitungsanschluß an die primäre Vorlaufleitung angeschlossen und von dem im Diffusor zugeordneten zweiten Leitungsanschluß geht die verbraucherseitige Vorlaufleitung ab. Mit dem dritten und vierten Leitungsanschluß sind die primäre bzw. die verbraucherseitige Rücklaufleitung verbunden. Gegenüber der sonst als Beimischeinrichtung in derartigen Warmwasserheizungs- oder -bereitungsanlagen verwendeten Dreiwege-Strahlpumpe ergibt sich der Vorteil des Wegfalls einer eigenen, von der Rücklaufleitung abzweigenden Beimischleitung und damit eine Vereinfachung der Installation, während andererseits die Gefahr des Auftretens von Entgasungserscheinungen des beigemischten Wassers in der Strahlpumpe auf ein Minimum reduziert ist.

Bei der bekannten Strahlpumpe münden die mit der primären und der sekundären Rücklaufleitung verbundenen Leitungsanschlüsse in dem Gehäuse unmittelbar im Bereiche der Treib- und der Fangdüse, die sich an dem der Treibdüse zugekehrten Ende des Mischrohres befindet und beispielsweise von der abgerundeten Innenkante des Mischrohres gebildet wird. Der über diese Leitungsanschlüsse fließende Querstrom kreuzt deshalb unmittelbar den Treibstrom vor seinem Eintritt in die Fangdüse. In der Praxis hat sich gezeigt, daß sich die Geräuschentwicklung dieser Strahlpumpe nicht unter einen bestimmten unteren Grenzwert absenken läßt, der bei bestimmten Anwendungsfällen unerwünscht hoch liegt. Außerdem kann unter Umständen eine unerwünschte Wirbelbildung am Treibstrahl auftreten, die zu Wärmeverlusten führt.

Die sich kreuzenden Wasserströme an der Mündung der Fangdüse führen bei der bekannten Strahlpumpe auch zu einer Verminderung der Pumpleistung infolge des Geschwindigkeitsgradienten längs dem Rand der Fangdüse. Im Extremfall ist es sogar möglich, daß der den Treibstrom kreuzende Rücklaufstrom Teile des Treibstroms an der Fangdüse vorbeileitet.

In der US-A-3 333 086 ist ein mit Dampf betriebener Speisewasserinjektor für Dampfkessel beschrieben, der ebenfalls einen Ringspalt enthält. Dieser Ringspalt dient jedoch der Verhinderung von Toträumen und heißen Stellen in dem Injektor und somit der Verhinderung von Dampfschlägen.

Bei dem bekannten Speisewasserinjektor ist deshalb ein zylindrisches Rohr vorgesehen, in dessen oberes Ende abdichtet die Treibdüse eingesetzt ist, während von dem unteren Ende her die als Venturidüse ausgebildete Fangdüse hineinragt. Zwischen der Venturidüse und der Innenwand des zylindrischen Rohres ergibt sich ein zylindrischer Ringspalt, der vom Fuß des Rohres bis zur Mündung der Venturidüse reicht, wobei die Mündung in der Nähe des oberen Endes des Rohres liegt. Das Rohr selbst ist wiederum von einem weiteren rohrförmigen Gehäuse konzentrisch umgeben, in das der Anschlußstutzen des Speisewassers mündet. Über insgesamt vier Drosselbohrungen, die am Fuß des inneren Rohres äquidistant angeordnet sind, steht der zylindrische Ringraum mit dem Raum des äußeren Gehäuses strömungsmäßig in Verbindung.

Damit weder in der Venturidüse noch an sonstigen Teilen des Speisewasserinjektors heiße Stellen entstehen, die zu Ausdampfungen führen könnten, muß das innere Rohr und die Außenfläche der Venturidüse hinreichend gleichmäßig von kaltem Speisewasser umströmt und gekühlt werden. Damit dies erreicht werden kann, muß der Gesamtquerschnitt der Drosselbohrungen am Fuß des inneren Rohres kleiner sein als der Querschnitt der Zulaufleitung und auch kleiner sein als der zylindrische Ringspalt zwischen dem inneren Rohr und der Außenfläche der Venturidüse.

Die Drosselbohrungen erhöhen zwangsläufig den Strömungswiderstand im Bereich des Speisewasserzuflusses und erzeugen außerdem nicht unerhebliche Strömungsgeräusche, die zwar bei einem Speisewasserinjektor, der selbst verhältnismäßig laut ist, keine Rolle spielen. Bei Warmwasserheizungsanlagen, die im allgemeinen in ruhiger Umgebung arbeiten, wäre solche Strömungsgeräusche äußerst lästig, zumal sie durch Körperschall nur wenig geschwächt über große Entfernungen übertragen werden.

Aus der US-A-4 183 722 schließlich ist eine zur Wasserförderung aus Brunnenbohrlöchern bestimmte Tauch-Strahlpumpe bekannt, die ein zylindrisches rohrförmiges Gehäuse aufweist, in dem ein das Mischrohr umgebender länglicher Ringkanal ausgebildet ist, durch den das angesaugte Wasser zu der Fangdüse strömt. Diese Strahlpumpe hat aber keinen dritten oder vierten Leitungsanschluß ; sie ist als Tauchpumpe nicht für Heizungsanlagen geeignet.

Aufgabe der Erfindung ist es nun, die eingangs genannte Strahlpumpe in dem Sinne zu verbessern, daß sie sich durch eine wesentlich geringere Geräuschentwicklung und gleichzeitig einen höheren Wirkungsgrad und einen geringeren Wärmeverlust auszeichnet.

Diese Aufgabe wird erfindungsgemäß durch die Strahlpumpe mit den Merkmalen des Hauptanspruches gelöst.

Die Länge des einen Beimischwasserzufuhrkanal bildenden Ringkanals ist so bemessen, daß an der Einmündung der Verbraucherseitigen Rücklaufleitung etwa entstehende Wirbel bis zum Eintritt in die Fangdüse weitgehend zerfallen sind.

Wie die praktische Erfahrung gezeigt hat, zeichnet sich die neue Strahlpumpe durch eine minimale Geräuschentwicklung aus, während ihr Wirkungsgrad größer ist als bei herkömmlichen Strahlpumpen vergleichbarer Bauart.

Besonders einfache konstruktive Verhältnisse ergeben sich, wenn das Mischrohr einstückig mit der Fangdüse ausgebildet ist, doch kann die Anordnung auch derart getroffen sein, daß die Fangdüse auf das zylindrische Mischrohr aufgesetzt ist.

Der Innendurchmesser des zylindrischen Mischrohres ist mit Vorteil gleich dem 0,4- bis 0,6-fachen, vorzugsweise dem 0,5-fachen des Nenndurchmessers des zweiten Leitungsanschlusses, während es sich als zweckmäßig erwiesen hat, wenn die Länge des Mischrohres gleich dem 3- bis 5-fachen, vorzugsweise dem 3,7-fachen des Nenndurchmessers des zweiten Leitungsanschlusses ist.

Um die Strahlpumpe für verschiedene Anwendungsfälle einsetzbar zu machen, ist es zweckmäßig, wenn die Treibdüse auswechselbar ist. Die scheibenartig ausgebildete Treibdüse kann dann zwischen dem Einspeisekopf und dem Gehäuse angeordnet sein.

Endlich hat es sich im Hinblick auf die Geräuscharmut noch als vorteilhaft erwiesen, wenn der Rundungsradius der Fangdüse gleich dem 0,2- bis 0,3-fachen, vorzugsweisem dem 0,25-fachen des Nenndurchmessers des zweiten Leitungsanschlusses ist.

Andere Weiterbildungen der Strahlpumpe sind Gegenstand von weiteren Unteransprüchen.

In der Zeichnung ist ein Ausführungsbeispiel des Gegenstandes der Erfindung dargestellt. Es zeigen :

Figur 1 eine Strahlpumpe gemäß der Erfindung, im axialen Schnitt, in einer Seitenansicht, und

Figur 2 eine Warmwasserheizungsanlage mit der Strahlpumpe nach Fig. 1, in schematischer Darstellung.

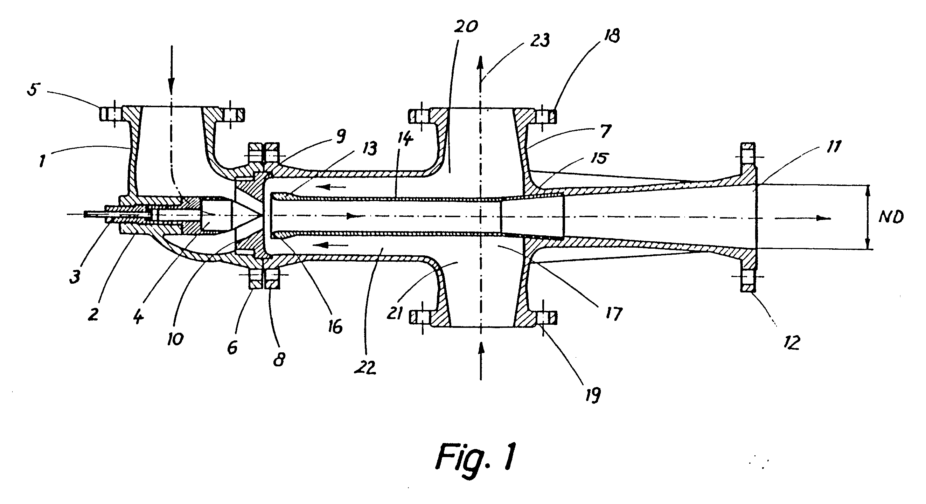

Die in Fig. 1 dargestellte Strahlpumpe weist einen Einspeisekopf 1 auf, in dem eine Führung 2 für die Spindel 3 eines Regulierkegels 4 vorgesehen ist. Der Einspeisekopf 1 ist im Prinzip nach Art eines Rohrkrümmers gestaltet und trägt zwei Anschlußflansche 5, 6, von denen der Anschlußflansch 5 einen ersten Leitungsanschluß für die Vorlaufleitung bildet.

Mittels des anderen Flansches 6 ist der Einspeisekopf 1 mit einem ähnlich einem Kreuzventilgehäuse gestalteten Gehäuse 7 verbunden, das einen Anschlußflansch 8 trägt, der mit dem Flansch 6 des Einspeisekopfs 1 verschraubt ist. Zwischen dem Einspeisekopf 1 und dem Gehäuse 7 ist ein scheibenartiger Düsenkörper 9 eingespannt, in dem eine kegelige Treibdüse 10 angeordnet ist, die koaxial zu dem Regulierkegel 4 ausgerichtet ist.

Das Gehäuse 7 weist einen zu der Treibdüse 10 koaxialen Diffusor 11 auf, der einen zweiten Leitungsanschluß 12 für die verbraucherseitige Vorlaufleitung trägt und dessen Nenndurchmessers mit ND bezeichnet ist. In dem Gehäuse 7 ist hinter der Treibdüse 10 eine zu dieser koaxiale Fangdüse 13 angeordnet, an die sich ein zylindrisches Mischrohr 14 anschließt, das über einen Diffusorteil 15 in den Diffusor 11 übergeht. Die Fangdüse 13 ist bei der dargestellten Ausführungsform einstückig an dem Mischrohr 14 angeformt ; es sind aber auch Ausführungsformen denkbar, bei denen die Fangdüse 13 auf das Mischrohr 14 aufgesetzt ist. Der Rundungsradius — bei 16 — an dem trompetenförmigen Einlauf der Fangdüse 13 ist gleich dem 0,2- bis 0,3-fachen, vorzugsweise dem 0,25-fachen des Nenndurchmessers ND des zweiten Leitungsanschlusses bei 12, während der Abstand der Fangdüse 13 von der Treibdüse 10 gleich dem 0,1- bis 0,3-fachen, vorzugsweise dem 0,16-fachen des Nenndurchmessers ND ist.

Das Mischrohr 14 erstreckt sich durch einen Gehäuseraum 17, in den zwei zueinander koaxiale Leitungsanschlüsse 18, 19 münden, von denen der Leitungsanschluß 18 als der dritte und der Leitungsanschluß 19 als der vierte Leitungsanschluß bezeichnet werden.

Die beiden Leitungsanschlüsse 18, 19 sind quer — im vorliegenden Falle rechtwinklig — zu der Achse des Mischrohres 14 gerichtet. Sie sind — wie erwähnt — zueinander koaxial angeordnet, doch sind auch Ausführungsformen denkbar, bei denen die Achsen der beiden Leitungsanschlüsse 18, 19 beispielsweise einen rechten Winkel miteinander einschließen.

Wie aus Fig. 1 zu entnehmen, sind die Mündungsöffnungen 20, 21 der beiden Leitungsanschlüsse 18, 19 im seitlichen Abstand von der Treibdüse 10 angeordnet, wobei zwischen den Mündungsöffnungen 20, 21 und der Treibdüse 10 ein länglicher Ringkanal 22 ausgebildet ist, der bei Verwendung der Strahlpumpe in Warmwasserheizungs- oder -bereitungsanlagen als Mischwasserzufuhrkanal dient und das Mischrohr 14 allseitig umgibt.

Eingehende theoretische und praktische Untersuchungen der beschriebenen Strahlpumpe haben ergeben, daß sich besonders günstige Verhältnisse hinsichtlich des Wirkungsgrades und der Geräuscharmut ergeben, wenn der Abstand zwischen der Fangdüse 13 und der Achse 23 der beiden Leitungsanschlüsse 18, 19 gleich dem 3- bis 4-fachen, vorzugsweise dem 3,3-fachen des Nenndurchmessers ND ist. Der Innendurchmesser des zylindrischen Mischrohres 14 ist gleich dem 0,4- bis 0,6-fachen, vorzugsweise dem 0,5-fachen des Nenndurchmessers ND, während seine Länge gleich dem 3- bis 5-fachen, vorzugsweise dem 3,75-fachen des Nenndurchmessers ND ist. Für den Ringkanal 22 gilt, daß sein Außendurchmesser gleich dem 1- bis 1,5-fachen, vorzugsweise dem 1,25-fachen des Nenndurchmessers ND ist.

Der Regulierkegel 4 ist als glattwandiger Kegel ausgebildet, dessen Basisdurchmesser gleich dem 0,4- bis 0,6-fachen vorzugsweise dem 0,5-fachen des Nenndurchmessers ND ist, während sein Öffnungs- oder Kegelwinkel 40 bis 60°, vorzugsweise 50°, beträgt.

Der Öffnungswinkel der austauschbaren kegeligen Treibdüse 10 ist bis zu 20°, vorzugsweise 10°, größer als jener des Regulierkegels 4 ; die axiale Düsenlänge ist gleich dem 0,4- bis 0,6-fachen, vorzugsweise dem 0,5-fachen des Nenndurchmessers ND.

Schließlich weisen der Diffusor 11 und der Diffusorteil 15 des Mischrohres 14 einen Gesamtöffnungswinkel von 5 bis 9°, vorzugsweise 7°, auf.

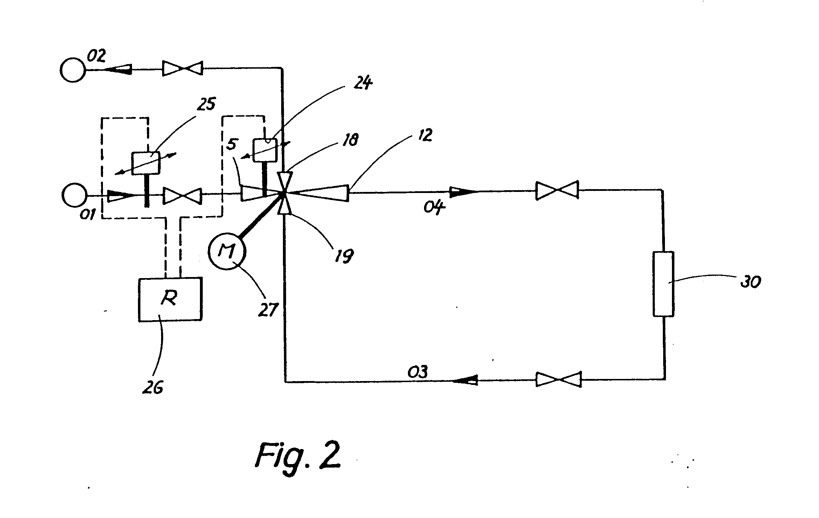

Die Verwendung der Strahlpumpe in einer Warmwasserheizungs- oder -bereitungsanlage ist im Prinzip in Fig. 2 veranschaulicht :

An den ersten Leitungsanschluß 5 des Einspeisekopfes 1 ist die primäre oder netzseitige Vorlaufleitung O1 angeschlossen, während mit dem zweiten Leitungsanschluß 12 am Diffusorausgang die verbraucherseitige Vorlaufleitung O4 verbunden ist, die zu einem Verbraucher 30 führt, der über die verbraucherseitige Rücklaufleitung O3 mit dem vierten Leitungsanschluß 19 der Strahlpumpe verbunden ist. Von dem dritten Leitungsanschluß 18 der Strahlpumpe schließlich geht die primäre oder netzseitige Rücklaufleitung O2 ab. In den einzelnen Vorlauf- und Rücklaufleitungen liegen naturgemäß zusätzliche Absperr- und Sicherheitsarmaturen, die im einzelnen hier nicht weiter erläutert sind.

Im Betrieb wird je nach der Stellung des Regulierkegels 4 ein Teil des über die Rücklaufleitung O3 zurückströmenden ausgekühlten Wassers als Mischwasser über den Mischwasserzufuhrkanal 22 in die Fangdüse 13 geleitet und damit dem als Treibwasser dienenden primären Vorlauf beigemischt. Da der Druck in der verbraucherseitigen Rücklaufleitung O3 und damit auch in dem Mischwasserzufuhrkanal 22 immer höher ist als in der primären Rücklaufleitung O2, können in dem Gehäuse 7 keine Kavitationserscheinungen auftreten.

Wenn der Wärmeverbrauch bei dem Verbraucher 30 stark gedrosselt wird, indem beispielsweise im Falle einer Zentralheizungsanlage die Thermostatventile schließen, sinkt die Beimischung zunächst ab, bis schließlich die Strömungsgeschwindigkeit in dem Mischwasserzufuhrkanal 22 gleich null wird. Ein weiteres Schließen der Thermostatventile bewirkt dann ein sogenanntes Kippen der Strahlpumpe. In diesem Zustand strömt ein Teil der Treibwassermenge aus der Treibdüse 10 durch den Mischwasserzufuhrkanal 22 in die Primärrücklaufleitung O2 ein. Bei vollständigem Kippen, d. h. bei vollständig abgesperrter verbraucherseitiger Vorlaufleitung O4 strömt die gesamte Treibwassermenge durch den Mischwasserzufuhrkanal 22 unmittelbar in die primäre Rücklaufleitung O2 ein.

Das Kippen der Strahlpumpe kann in einfacher Weise dadurch überwacht und verhindert werden, daß die Temperatur in dem Mischwasserzufuhrkanal 22 gemessen wird. Zu diesem Zwecke ist in dem Mischwasserzufuhrkanal 22 ein Temperaturfühler 24 vorgesehen, der ebenso wie ein in der primären Vorlaufleitung O1 liegender Temperaturfühler 25 ein Temperatursignal auf einen Regler 26 gibt, der einen Stellmotor 27 ansteuert, welcher mit der Spindel 3 des Regulierkegels 4 gekuppelt ist.

Die beiden Temperaturfühler 24, 25 können auch sogenannte Kontaktthermometer sein.

Wenn die Temperatur in dem Mischwasserzufuhrkanal 22 bis auf einen Wert dicht unterhalb der von dem Temperaturfühler 25 gemessenen Temperatur in der Vorlaufleitung O1 ansteigt, veranlaßt der Regler 26, daß der Stellmotor 27 den Regulierkegel 4 in die Treibdüse 10 einfährt. Infolge des gedrosselten Treibwasserquerschnittes nimmt die Beimischung zu und die Temperatur in dem Mischwasserzufuhrkanal 22 fällt sofort schnell ab, womit der Stellmotor 27 stehen bleibt oder aber — falls die verbraucherseitige Vorlaufleitung O4 ganz abgesperrt wird — die Treibdüse 10 völlig absperrt.

Der erste Leitungsanschluß 5 kann, wie aus Fig. 1 zu ersehen, in Strömungsrichtung diffusorförmig sich erweiternd ausgebildet sein. Diese Maßnahme dient dazu, die Druckverluste zu verringern. In ähnlicher Weise ist der vierte Leitungsanschluß 19 ebenfalls in Strömungsrichtung sich erweiternd ausgebildet, um die bei der Strömungsverzweigung entstehenden Druckverluste zu verringern. Im Gegensatz dazu ist der dritte Leitungsanschluß 18 in Strömungsrichtung sich verengend ausgebildet, wodurch erreicht wird, daß sich an der Anschlußstelle für den Leitungsflansch wieder das Nennmaß ergibt.

Bei dem beschriebenen Ausführungsbeispiel ist die Strahlpumpe in einer Warmwasserheizungsanlage mit Rücklaufbeimischung verwendet. Grundsätzlich ist der Einsatz dieser Strahlpumpe auch für andere Zwecke der Heizungs- oder Verfahrenstechnik, zum Mischen von Strömen od. dgl. möglich, d. h. immer dann, wenn es darauf ankommt, einen möglichst geräuscharmen Strahlpumpenbetrieb mit hohem Wirkungsgrad zu erzielen. Bei diesen Anwendungsfällen — beispielsweise bei der Verwendung der Strahlpumpe als Mischer — kann auch ein Leitungsanschluß (beispielsweise der Leitungsanschluß 18) entfallen oder aber es sind Fälle denkbar, bei denen über beide Leitungsanschlüsse 18, 19 das beizumischende Medium angesaugt oder zugeführt wird. Wesentlich ist in all diesen Fällen, daß am Ende des Ringkanales 22 eine 180°-Umlenkung des Saugstromes beim Eintritt in die Fangdüse 13 vorhanden ist.

Dabei gibt es Anwendungsfälle, bei denen auf die beschriebene Regelung der Strahlpumpe verzichtet werden kann und es genügt, durch einmalige entsprechende Bemessung des Treibdüsenquerschnitts die richtigen Betriebscharakteristika einzustellen.

**Patentansprüche**

1. Einstufige Strahlpumpe für Warmwasserheizungs- oder -bereitungsanlagen mit Rücklaufbeimischung, mit einem einen ersten Leitungsanschluß für den wasserförmigen Treibstrom aufweisenden Einspeisekopf (1), der mit einem die Fangdüse (13) enthaltenden Gehäuse verbunden ist, das ein über einen Diffusor (11), mit einem zweiten Leitungsanschluß für den verbraucherseitigen Vorlauf verbundenes, zu der Treibdüse (10), koaxiales und an die Fangdüse anschließendes zylindrisches Mischrohr (14) enthält, das sich durch einen Gehäuseraum (17) erstreckt, in den jeweils quer zu dem Mischrohr gerichtet ein dritter und ein vierter Leitungsanschluß für die netzseitige bzw. die verbraucherseitige Rücklaufleitung münden, wodurch bei Durchströmung ein quer zu dem Mischrohr verlaufender Wasserstrom entsteht, dadurch gekennzeichnet, daß die Mündungsöffnungen (20, 21) des dritten und des vierten Leitungsanschlusses (18, 19) im Abstand von der Treibdüse (10) neben dem Mischrohr (14) angeordnet sind, daß der Abstand zwischen der Mündung der Fangdüse (13) und der Achse (23) des dritten bzw. vierten Leitungsanschlusses (18, 19) gleich dem 3- bis 4-fachen, vorzugsweise dem 3,3-fachen des Nenndurchmessers (ND) des zweiten Leitungsanschlusses (12) ist, und daß zwischen den Mündungsöffnungen (20, 21) und der Treibdüse (10) ein in Gestalt eines länglichen Ringkanales (22) ausgebildeter, das Mischrohr (14) umgebender Teil des Gehäuseraumes (17) liegt, durch den das beizumischende Wasser längs der Außenwand des Mischrohres (14) zu der Fangdüse (13) geleitet ist.

2. Strahlpumpe nach Anspruch 1, dadurch gekennzeichnet, daß das Mischrohr (14) einstückig mit der Fangdüse (13) ausgebildet ist.

3. Strahlpumpe nach Anspruch 1, dadurch gekennzeichnet, daß die Fangdüse (13) auf das zylindrische Mischrohr (14) aufgesetzt ist.

4. Strahlpumpe nach einem der vorhergehenden Ansprüche, dadurch gekennzeichnet, daß der Innendurchmesser des zylindrischen Mischrohres (14) gleich dem 0,4- bis 0,6-fachen, vorzugsweise dem 0,5-fachen des Nenndurchmessers (ND) des zweiten Leitungsanschlusses (12) ist.

5. Strahlpumpe nach einem der vorhergehenden Ansprüche, dadurch gekennzeichnet, daß die Länge des zylindrischen Mischrohres (14) gleich dem 3- bis 5-fachen, vorzugsweise dem 3,7-fachen des Nenndurchmessers (ND) des zweiten Leitungsanschlusses (12) ist.

6. Strahlpumpe nach einem der vorhergehenden Ansprüche, dadurch gekennzeichnet, daß der Abstand zwischen der Treibdüse (10) und der Fangdüse (13) gleich dem 0,1- bis 0,3-fachen, vorzugsweise dem 0,16-fachen des Nenndurchmessers (ND) des zweiten Leitungsanschlusses (12) ist.

7. Strahlpumpe nach einem der vorhergehenden Ansprüche, dadurch gekennzeichnet, daß der Durchmesser des Ringkanales (22) gleich dem 1- bis 1,5-fachen, vorzugsweise dem 1,25-fachen des Nenndurchmessers (ND) des zweiten Leitungsanschlusses (12) ist.

8. Strahlpumpe nach einem der vorhergehenden Ansprüche, dadurch gekennzeichnet, daß der Diffusor einen Gesamtöffnungswinkel von 5° bis 9°, vorzugsweise ca. 7° aufweist.

9. Strahlpumpe nach einem der vorhergehenden Ansprüche, dadurch gekennzeichnet, daß sie regelbar mit einem den wirksamen Strömungsquerschnitt der Treibdüse (10) beeinflussenden Stellorgan angetrieben ist.

10. Strahlpumpe nach Anspruch 9, dadurch gekennzeichnet, daß das Stellorgan ein glattwandiger Regulierkegel (4) ist und die Treibdüse (10) eine kegelige Profilgestalt aufweist.

11. Strahlpumpe nach Anspruch 10, dadurch gekennzeichnet, daß der Basisdurchmesser des Regulierkegels (4) gleich dem 0,4- bis 0,6-fachen, vorzugsweise dem 0,5-fachen des Nenndurchmessers (ND) des zweiten Leitungsanschlusses (12) ist.

12. Strahlpumpe nach Anspruch 10 oder 11, dadurch gekennzeichnet, daß der Kegelwinkel des Regulierkegels (4) 40° bis 60°, vorzugsweise ca. 50° beträgt.

13. Strahlpumpe nach den Ansprüchen 10 und 12, dadurch gekennzeichnet, daß der Offnungswinkel der Treibdüse (10) bis zu 20°, vorzugsweise 10°, größer ist als der Kegelwinkel des Regulierkegels (4).

14. Strahlpumpe nach Anspruch 13, dadurch gekennzeichnet, daß die axiale Länge der Treibdüse (10) gleich dem 0,4- bis 0,6-fachen, vorzugsweise dem 0,5-fachen des Nenndurchmessers (ND) des zweiten Leitungsanschlusses (12) ist.

15. Strahlpumpe nach einem der vorhergehenden Ansprüche, dadurch gekennzeichnet, daß die Treibdüse (10) auswechselbar ist.

16. Strahlpumpe nach Anspruch 15, dadurch gekennzeichnet, daß die Treibdüse (10) auf einem scheibenartig ausgebildeten Düsenkörper (9) zwischen dem Einspeisekopf (1) und dem Gehäuse (7) angeordnet ist.

17. Strahlpumpe nach einem der vorhergehenden Ansprüche, dadurch gekennzeichnet, daß der Rundungsradius der Fangdüse (13) gleich dem 0,2- bis 0,3-fachen, vorzugsweise dem 0,25-fachen des Nenndurchmessers (ND) des zweiten Leitungsanschlusses (12) ist.

18. Strahlpumpe nach Anspruch 9, dadurch gekennzeichnet, daß ihr Stellorgan (4) über einen Stellmotor (27) in Abhängigkeit von der in dem Ringkanal (22) herrschenden Temperatur beeinflußbar ist und daß bei Unterschreitung einer vorbestimmten Differenz zwischen der Temperatur des primären Vorlaufes (O1) in dem ersten Leitungsanschluß und der in dem Ringkanal (22) herrschenden Temperatur das Stellorgan (4) selbsttätig im Schließungssinne verstellbar ist.

19. Strahlpumpe nach einem der vorhergehenden Ansprüche, dadurch gekennzeichnet, daß der erste Leitungsanschluß (5) sich in Strömungsrichtung diffusorförmig erweiternd ausgebildet ist.

20. Strahlpumpe nach einem der vorhergehenden Ansprüche, dadurch gekennzeichnet, daß der dritte und/oder vierte Leitungsanschluß (18, 19) sich in Strömungsrichtung diffusorförmig erweiternd ausgebildet sind.

21. Strahlpumpe nach Anspruch 20, dadurch gekennzeichnet, daß der dritte oder vierte Leitungsanschluß (18 oder 19) in Strömungsrichtung sich verengend ausgebildet ist.

**Claims**

1. Single-stage jet pump for hot water heating or preparation installations with return admixture, with an infeed head (1) having a first conduit connection for the power current of water form, which head is connected with a housing containing a combining nozzle (13), which housing contains a cylindrical mixer pipe (14) connected through a diffuser (11) with a second conduit connection for the initial water on the user side, coaxial with a power nozzle (10) and connected to the combining nozzle, which mixer pipe extends through a housing chamber (17) into which, in each case directed transversely of the mixer pipe, a third and a fourth conduit connection for the mains-side and the user-side return conduit respectively open, whereby on through-flow a water current extending transversely of the mixer pipe occurs, characterised in that the entry openings (20, 21) of the third and fourth conduit connections (18, 19) are arranged beside the mixer pipe (14) with spacing from the power nozzle (10), in that the distance between the mouth of the combining nozzle (13) and the axis (23) of the third and fourth conduit connection (18, 19) is equal to 3 to 4 times, preferably 3.3 times, the nominal diameter (ND) of the second conduit connection (12), and in that between the entry openings (20, 21) and the power nozzle (10) there lies a part of the housing chamber (17) surrounding the mixer pipe (14) and made in the form of an elongated annular passage (22), through which the water to be admixed is conducted along the outer wall of the mixer pipe (14) to the combining nozzle (13).

2. Jet pump according to claim 1, characterised in that the mixer pipe (14) is made in one piece with the combining nozzle (13).

3. Jet pump according to claim 1, characterised in that the combining nozzle (13) is set upon the cylindrical mixer pipe (14).

4. Jet pump according to any one of the preceding claims, characterised in that the internal diameter of the cylindrical mixer pipe (14) is equal to 0.4 to 0.6 times, preferably 0.5 times, the nominal diameter (ND) of the second conduit connection (12).

5. Jet pump according to any one of the preceding claims, characterised in that the length of the cylindrical mixer pipe (14) is equal to 3 to 5 times, preferably 3.7 times, the nominal diameter (ND) of the second conduit connection (12).

6. Jet pump according to any one of the preceding claims, characterised in that the distance between the power nozzle (10) and the combining nozzle (13) is equal to 0.1 to 0.3 times, preferably 0.16 times, the nominal diameter (ND) of the second conduit connection (12).

7. Jet pump according to any one of the preceding claims, characterised in that the diameter of the annular passage (22) is equal to 1 to 1.5 times, preferably 1.25 times, the nominal diameter (ND) of the second conduit connection (12).

8. Jet pump according to any one of the preceding claims, characterised in that the diffuser possesses a total angle of aperture of 5° to 9°, preferably about 7°.

9. Jet pump according to any one of the preceding claims, characterised in that it is regulated with a setting element which influences the effectives flow cross-section of the power nozzle (10).

10. Jet pump according to claim 9, characterised in that the setting element is a smooth-walled regulating cone (4) and the power nozzle (10) has a conical profile configuration.

11. Jet pump according to claim 10, characterised in that the base diameter of the regulating cone (4) is equal to 0.4 to 0.6 times, preferably 0.5 times, the nominal diameter (ND) of the second conduit connection (12).

12. Jet pump according to claim 10 or 11, characterised in that the angle of conicity of the regulating cone (4) amounts to 40° to 60°, preferably about 50°.

13. Jet pump according to claims 10 and 12, characterised in that the angle of aperture of the power nozzle (10) is up to 20°, preferably 10°, larger than the angle of conicity of the regulating cone (4).

14. Jet pump according to claim 13, characterised in that the axial length of the power nozzle (10) is equal to 0.4 to 0.6 times, preferably 0.5 times, the nominal diameter (ND) of the second conduit connection (12).

15. Jet pump according to any one of the preceding claims, characterised in that the power nozzle (10) is exchangeable.

16. Jet pump according to claim 15, characterised in that the power nozzle (10) is arranged on a nozzle body (9) of disc-type formation between the infeed head (1) and the housing (7).

17. Jet pump according to any one of the preceding claims, characterised in that the radius of curvature of the combining nozzle (13) is equal to 0.2 to 0.3 times, preferably 0.25 times, the nominal diameter (ND) of the second conduit connection (12).

18. Jet pump according to claim 9, characterised in that its setting element (4) is influenceable by means of a servo-motor (27) in dependence upon the temperature prevailing in the annular passage (22) and in that on falling short of predetermined difference between the temperature of the primary initial water (O1) in the first conduit connection and the temperature prevailing in the annular passage (22) the setting element (4) is automatically shiftable in the closing direction.

19. Jet pump according to any one of the preceding claims, characterised in that the first conduit connection (5) is formed widening in diffuser form in the direction of flow.

20. Jet pump according to any one of the preceding claims, characterised in that the third and/or fourth conduit connection (18, 19) is or are formed widening in diffuser form in the direction of flow.

21. Jet pump according to claim 20, characterised in that the third or fourth conduit connection (18 or 19) is formed narrowing in the direction of flow.

## Revendications

1. Injecteur à un étage, pour installation de chauffage par eau chaude ou installation de préparation d'eau chaude, avec mélange d'eau par boucle de retour, comprenant une tubulure d'admission (1) présentant un premier raccordement de conduite pour l'écoulement moteur aqueux, ladite tubulure d'admission étant reliée à un carter renfermant la buse de captation (13), ledit carter contenant un tube de mélange (14), lequel est fixé sur un diffuseur (11) ayant un deuxième raccordement de conduite pour la circulation principale du côté utilisateur, ledit tube de mélange étant coaxial à la tuyère d'entraînement (10) et raccordé à la buse de captation, ledit tube de mélange s'étendant à travers un espace (17) du carter, dans lequel débouchent, chaque fois perpendiculairement au tube de mélange, un troisième et un quatrième raccordement de conduite pour la conduite de retour, du côté amont et du côté utilisateur, ces raccordements provoquant, lorsqu'ils sont alimentés, un écoulement d'eau perpendiculaire au tube de mélange, caractérisé par le fait que les ouvertures d'orifices (20, 21) des troisième et quatrième raccordements de conduite (18, 19) sont placées à distance de la tuyère d'entraînement (10) et près du tube de mélange (14), de façon que la distance entre l'orifice de la buse de captation (13) et l'axe (23) des troisième et quatrième raccordements de conduite (18, 19) soit égale à 3 à 4 fois, et de préférence 3,3 fois, la valeur du diamètre nominal (ND) du deuxième raccordement de conduite (12), et de façon qu'entre les ouvertures d'orifices (20, 21) et la tuyère d'entraînement (10) se situe une partie de l'espace (17) du carter, cette partie présentant la forme d'un canal annulaire allongé (22) entourant le tube de mélange (14), l'eau de mélange s'écoulant dans ladite partie le long de la paroi extérieure du tube de mélange (14) jusqu'à la buse de captation (13).

2. Injecteur selon la revendication 1, caractérisé par le fait que le tube de mélange (14) et la buse de captation (13) sont formés d'une seule pièce.

3. Injecteur selon la revendication 1, caractérisé par le fait que la buse de captation (13) est montée sur le tube cylindrique de mélange (14).

4. Injecteur selon l'une quelconque des revendications précédentes, caractérisé par le fait que le diamètre intérieur du tube cylindrique de mélange (14) est égal à 0,4 à 0,6 fois, et de préférence 0,5 fois, la valeur du diamètre nominal (ND) du deuxième raccordement de conduite (12).

5. Injecteur selon l'une quelconque des revendications précédentes, caractérisé par le fait que la longueur du tube cylindrique de mélange (14) est égale à 3 à 5 fois, et de préférence 3,7 fois, la valeur du diamètre nominal (ND) du deuxième raccordement de conduite (12).

6. Injecteur selon l'une quelconque des revendications précédentes, caractérisé par le fait que la distance entre la tuyère d'entraînement (10) et la buse de captation (13) est égale à 0,1 à 0,3 fois, et de préférence 0,16 fois, la valeur du diamètre nominal (ND) du deuxième raccordement de conduite (12).

7. Injecteur selon l'une quelconque des revendications précédentes, caractérisé par le fait que le diamètre du canal annulaire (22) est égal à 1 à 1,5 fois, et de préférence 1,25 fois, la valeur du diamètre nominal (ND) du deuxième raccordement de conduite (12).

8. Injecteur selon l'une quelconque des revendications précédentes, caractérisé par le fait que le diffuseur (11) présente un angle total d'ouverture de 5 à 9 degrés, et de préférence 7 degrés.

9. Injecteur selon l'une quelconque des revendications précédentes, caractérisé par le fait qu'il est régulé avec un organe de manœuvre agissant sur la section efficace d'écoulement de la tuyère d'entraînement (10).

10. Injecteur selon la revendication 9, caractérisé par le fait que l'organe de manœuvre est un cône de réglage (4) à surface lisse, et que la tuyère d'entraînement (10) présente un profil en forme de cône.

11. Injecteur selon la revendication 10, caractérisé par le fait que le diamètre de base du cône de réglage (4) est égal à 0,4 à 0,6 fois, et de préférence 0,5 fois, la valeur du diamètre nominal (ND) du deuxième raccordement de conduite (12).

12. Injecteur selon l'une quelconque des revendications 10 et 11, caractérisé par le fait que l'angle au sommet du cône de réglage (4) est de 40 à 60 degrés, et de préférence environ 50 degrés.

13. Injecteur selon l'une quelconque des revendications 10 et 12, caractérisé par le fait que l'angle d'ouverture de la tuyère d'entraînement (10) est plus grand que l'angle au sommet du cône de réglage (4), la différence des angles allant jusqu'à 20 degrés, et de préférence 10 degrés.

14. Injecteur selon la revendication 13, caractérisé par le fait que la longueur axiale de la tuyère d'entraînement (10) est égale à 0,4 à 0,6 fois, et de préférence 0,5 fois, la valeur du diamètre nominal (ND) du deuxième raccordement de conduite (12).

15. Injecteur selon l'une quelconque des revendications précédentes, caractérisé par le fait que la tuyère d'entraînement (10) est interchangeable.

16. Injecteur selon la revendication 15, caractérisé par le fait que la tuyère d'entraînement (10) est disposée sur un corps de tuyère (9) en forme de disque, entre la tubulure d'admission (1) et le carter (7).

17. Injecteur selon l'une quelconque des revendications précédentes, caractérisé par le fait que le rayon d'arrondi de la buse de captation (13) est égal à 0,2 à 0,3 fois, et de préférence 0,25 fois, la valeur du diamètre nominal (ND) du deuxième raccordement de conduite (12).

18. Injecteur selon la revendication 9, caractérisé par le fait que son organe de manœuvre (4) est mobile en fonction de la température régnant dans le canal annulaire (22), par l'intermédiaire d'un moteur de manœuvre (27), et que, lorsque la différence entre la température du circuit primaire (O1) dans le premier raccordement de conduite et la température régnant dans le canal annulaire (22) devient inférieure à une valeur prédéterminée, l'organe de manœuvre (4) est automatiquement déplacé, dans le sens de la fermeture.

19. Injecteur selon l'une quelconque des revendications précédentes, caractérisé par le fait que le premier raccordement de conduite (5) a la forme d'un diffuseur s'élargissant dans le sens de l'écoulement.

20. Injecteur selon l'une quelconque des revendications précédentes, caractérisé par le fait que le troisième et/ou le quatrième raccordement de conduite (18, 19) ont la forme d'un diffuseur s'élargissant dans le sens de l'écoulement.

21. Injecteur selon la revendication 20, caractérisé par le fait que le troisième ou le quatrième raccordement de conduite (18 ou 19) va en se rétrécissant dans le sens de l'écoulement.

Fig. 1

1

*Fig. 2*

0 068 247